# EUROPEAN PATENT APPLICATION

(11) **EP 4 431 558 A1**
(43) Date of publication of application: **18.09.2024**
(21) Application number: 22893230.7
(22) Date of filing: 10.11.2022
(51) Int. Cl.: C08K 5/00, C08K 5/11, C08K 5/103, C08K 5/20, C08K 3/013, C08L 27/06, C08J 9/00

(54) **PLASTICIZER COMPOSITION AND VINYL CHLORIDE RESIN COMPOSITION COMPRISING SAME**

(30) Priority: 10.11.2021 KR 20210153912
(71) Applicant: Hanwha Solutions Corporation, Jung-gu Seoul 04541 (KR)
(72) Inventor: RYOO, Sungmin, Daejeon 34128 (KR); YOO, Myung-Ik, Daejeon 34128 (KR); KIM, Jaesong, Daejeon 34128 (KR)
(74) Representative: Berggren Oy
(86) International application number: PCT/KR2022/017659
(87) International publication number: WO 2023/085811

(57) **Abstract**

The present disclosure relates to a plasticizer composition with excellent migration resistance, cold resistance, and processability even without containing a phthalate material, and a vinyl chloride resin composition including the same.

## Description

### [TECHNICAL FIELD]

### CROSS-REFERENCE TO RELATED APPLICATION(S)

This application claims the benefits of Korean Patent Application No. 10-2021-0153912 filed on November 10, 2021 with the Korean Intellectual Property Office, the disclosure of which is incorporated herein by reference in its entirety.

The present disclosure relates to a plasticizer composition and a vinyl chloride resin composition including the same. Specifically, it relates to a plasticizer composition having excellent migration resistance, cold resistance, and processability, while exhibiting low viscosity characteristics required for plastisol for wallpaper, flooring, and dip coating even without containing a phthalate material, and a vinyl chloride resin composition including the same.

### [BACKGROUND OF ART]

A vinyl chloride resin includes a homopolymer of vinyl chloride and a copolymer containing 50% or more of vinyl chloride, and is one of five general-purpose thermoplastic resins prepared by suspension polymerization and emulsion polymerization. A polyvinyl chloride resin prepared by emulsion polymerization is mixed with a plasticizer, a stabilizer, a filler, a blowing agent, a pigment, a viscosity depressant, a dispersing agent, titanium dioxide (TiO₂), and a sub-material having a specific function to be used in a plastisol form in various fields such as a floor material, wall paper, tarpaulin, artificial leathers, toys, and automobile undercoating materials, through a coating forming method or mold forming method.

In the vinyl chloride resin compositions, the plasticizers are liquid components that occupy the largest content, and examples thereof include phthalate-based products such as di-2-ethylhexyl phthalate (DEHP), di-isononyl phthalate (DINP), di-N-octyl phthalate (DNOP), di-iso-decyl phthalate (DIDP), butyl benzyl phthalate (BBP), and din-butyl phthalate (DBP). In particular, DINP has been widely used.

However, the phthalate-based plasticizers, which are endocrine disrupters that interfere or disrupt the human hormonal actions, are socially considered suspicious as environmental hormones. Thus, there is a global movement to regulate the phthalate plasticizers, especially in developed countries.

Accordingly, there have been attempts to use a terephthalate ester-based plasticizer (e.g., DOTP), a cyclohexane dicarboxylic acid ester-based plasticizer (e.g., DINCH, DEHCH), or a polyol ether-based plasticizer (e.g., tetravalerate) alone as eco-friendly non-phthalate plasticizers for plastisols.

DOTP (di-octyl terephthalate), a representative example of terephthalate ester plasticizers, has a rather high plastisol viscosity and a slow gelling rate, so it requires high-temperature work during molding, resulting in inferior processability. In addition, its migration resistance is very poor compared to previously used phthalate plasticizers, so there is a high risk that the plasticizer may migrate out of the product. Accordingly, there is a risk that the plasticizer content in the product is reduced, which may result in a decrease in physical properties and adversely affect durability of the product. Additionally, there are concerns that the plasticizer may migrate and be exposed to the human body.

DINCH (diisononyl cyclohexane-1,2-dicarboxylate), a cyclohexane dicarboxylic acid ester-based plasticizer, has a low plastisol viscosity and excellent cold resistance. When the viscosity of plastisol is low, processing may be performed at a fast processing rate during spread coating, which is a representative plastisol molding method used in wallpaper, flooring, carpets, etc., and it is easy to process into thin products during dip doating. The lower the viscosity, the more plastisol can be mixed with a small amount of plasticizer, which is advantageous for manufacturing products with relatively high hardness. However, DINCH has a very slow gelling rate, which is comparable to that of DOTP, and thus has very poor processability and poor migration resistance.

DEHCH (di(2-ethylhexyl)cyclohexane-1,4-dicarboxylate), the same cyclohexane dicarboxylic acid ester-based plasticizer, has a faster gelling rate than DOTP and DINCH, and thus has better processability while having low viscosity and excellent cold resistance. However, it is more volatile than DOTP at high temperatures due to the chemical structure of DEHCH, which is disadvantageous in maintaining product durability. In addition, it has better migration resistance than DOTP and DINCH, but has the problem of inferior migration resistance compared to existing phthalate plasticizers.

Pentaerythritol tetravalerate, a polyol ester-based plasticizer, has a gelling rate similar to DEHCH, and thus has excellent moldability and low volatility. It also exhibits migration resistance similar to phthalates. However, it has a problem of high viscosity and inferior cold resistance compared to DEHCH.

Accordingly, citrate-based plasticizers (TBC, ATBC, TEHC, TNC, TBOC, ATHC, ATOC, THC, etc.) were conventionally added to improve migration resistance of plasticizers such as DOTP, DEHCH, and DINCH. However, the citrate-based plasticizers have a characteristic pungent and unpleasant odor, causing discomfort during processing and use. In addition, product durability may be deteriorated due to extreme volatility at high temperatures. Further, when they are mixed at a predetermined ratio or more, the viscosity of the plastisol increases and the change in viscosity over time becomes very large, so that there are limitations in using them for plastisols.

Accordingly, there is still a need for a plasticizer composition with excellent cold resistance and migration resistance, fast gelling rate, low viscosity, and excellent processability.

### [DETAILED DESCRIPTION OF THE INVENTION]

### [Technical Problem]

In the present disclosure, there are provided a plasticizer composition including no phthalate material, and a vinyl chloride resin composition including the same.

Specifically, there are provided a plasticizer composition with excellent migration resistance, cold resistance, and processability even without containing a phthalate material, and a vinyl chloride resin composition including the same.

### [Technical Solution]

One embodiment of the present disclosure relates to a plasticizer composition including di(2-ethylhexyl)cyclohexane-1,4-dicarboxylate (DEHCH) and a polyol ester-based compound, wherein the plasticizer composition includes 40 to 80 parts by weight of di(2-ethylhexyl)cyclohexane-1,4-dicarboxylate, and 60 to 20 parts by weight of a polyol ester-based compound based on 100 parts by weight of the plasticizer composition.

In addition, one embodiment of the present disclosure relates to a vinyl chloride resin composition including 100 parts by weight of a vinyl chloride resin, 50 to 200 parts by weight of the plasticizer composition, and 1.5 to 10 parts by weight of a stabilizer.

### [ADVANTAGEOUS EFFECTS]

The vinyl chloride resin composition including the plasticizer composition according to the present disclosure has excellent migration resistance, cold resistance, and processability.

In addition, according to the present disclosure, it is possible to provide an optimal mixing ratio of di(2-ethylhexyl)cyclohexane-1,4-dicarboxylate and a polyol ester-based compound that can improve physical properties of the vinyl chloride resin.

### [DETAILED DESCRIPTION OF THE EMBODIMENTS]

The terms "the first", "the second", and the like are used to describe a variety of components, and these terms are merely employed to distinguish a certain component from other components.

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, numbers, steps, components, or combinations thereof, but do not preclude the presence or addition of one or more other features, numbers, steps, components, or combinations thereof.

Also, as used herein, when a layer or an element is mentioned to be formed "on" layers or elements, the layer or element may be directly formed on the layers or elements, or other layers or elements may be additionally formed between the layers, on a subject, or on a substrate.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the plasticizer composition according to embodiments of the present invention will be described in detail.

In the present disclosure, there are provided a plasticizer composition with excellent migration resistance, cold resistance, and processability even without containing a phthalate material, and a vinyl chloride resin composition including the same.

At this time, cold resistance refers to the characteristic of maintaining flexibility at low temperatures. The cold resistance is an important property in Europe, Northeast Asian countries, North America, and Canada, where there are cold seasons with temperature below freezing, except for some hot regions. If the cold resistance is poor, the product may break during use/movement in cold winter. Cold resistance can be quantified in several ways, and commonly compared using a numerical value called LTB (Low temperature Brittleness), the lowest temperature at which the specimen breaks. In general, the lower the LTB value, the better the cold resistance of the product. Specifically, the vinyl chloride resin composition of one embodiment of the present disclosure may have a cold resistance LTB value of -30 °C or lower, specifically -60 to - 30 °C, -55 to -35 °C, or -50 to -40 °C. The absolute LTB value may vary depending on the vinyl chloride resin, the type and amount of additives, and the input ratio, but the tendency between plasticizers does not change. In other words, the vinyl chloride resin composition including the plasticizer composition according to the present disclosure has the advantage of maintaining excellent product characteristics when used in countries with cold seasons below freezing.

The migration of the plasticizer refers to a phenomenon in which a part of the plasticizer mixed with a polymer resin flows out of the polymer resin. When leaked plasticizers enter the body, it may inhibit the normal activity of the endocrine system directly involved in the life activity or may trigger an abnormal reaction to cause lethal harm to humans, animals, and aquatic organisms, and thus the migration of the plasticizers should be inhibited as much as possible. Accordingly, migration resistance refers to the characteristic that additives such as plasticizers do not migrate out of the product after molding the resin into a final product.

In relation to the low viscosity characteristics, if the viscosity of plastisol is low, it is advantageous for making high-speed coating and thin dip coating products. In addition, the addition of additional liquid additives (e.g., viscosity depressant, dispersing agent, etc.) used to lower the viscosity can be reduced. Some liquid additives used to lower the viscosity have problems of poor compatibility with vinyl chloride resin. Therefore, a lower amount of liquid additives added for viscosity control purposes is more advantageous for improving migration resistance and achieving product properties.

Accordingly, in order to provide a plasticizer composition exhibiting excellent migration resistance, cold resistance, and processability, the present disclosure provides a plasticizer composition including di(2-ethylhexyl)cyclohexane-1,4-dicarboxylate (DEHCH) and a polyol ester-based compound.

Di(2-ethylhexyl)cyclohexane-1,4-dicarboxylate, represented by the following [Chemical Formula 1], has low viscosity at room and low temperatures, and can achieve excellent coating properties, especially dip coating properties while having a fast gelling rate, excellent processability, and excellent cold resistance. However, di(2-ethylhexyl)cyclohexane-1,4-dicarboxylate has the disadvantage of being more volatilized at high temperatures than other terephthalate ester-based plasticizers due to its chemical structure and having inferior migration resistance compared to phthalate plasticizers. Accordingly, there is a need to improve the properties of di(2-ethylhexyl)cyclohexane-1,4-dicarboxylate by mixing it with other plasticizers rather than using it alone.

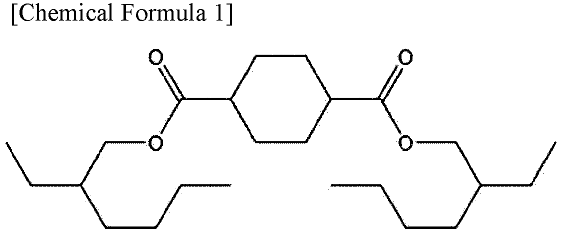

On the other hand, polyol ester-based compounds are substances represented by the following [Chemical Formula 2]. Each of R₁, R₂, R₃, and R₄ is a material containing an alkyl ester group (-O-CO-alkyl group) having 3 to 6 carbon atoms, and includes one or more types thereof. When used as a plasticizer, the polyol ester-based compounds exhibit a gelling rate similar to that of di(2-ethylhexyl)cyclohexane-1,4-dicarboxylate, thus providing excellent processability, relatively excellent volatilization characteristics, and superior migration resistance similar to those of existing phthalate-based plasticizers. However, it has the disadvantage of higher viscosity and inferior cold resistance compared to di(2-ethylhexyl)cyclohexane-1,4-dicarboxylate.

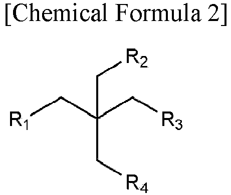

The polyol ester-based compound is a compound including at least one selected from the group consisting of pentaerythritol tetra n-butyrate, pentaerythritol tetra i-butyrate, pentaerythritol tri n-butyrate mono-valerate, pentaerythritol di n-butyrate di-valerate, pentaerythritol tetravalerate, pentaerythritol tetraoctylate, and pentaerythritol tetra-ethylheptylate.

Accordingly, the present disclosure uses a mixture of di(2-ethylhexyl)cyclohexane-1,4-dicarboxylate and a polyol ester-based compound as described above, and aims to provide a mixing ratio that can compensate for each other's shortcomings.

Accordingly, the plasticizer composition may include 40 to 80 parts by weight of di(2-ethylhexyl)cyclohexane-1,4-dicarboxylate and 20 to 60 parts by weight of a polyol ester-based compound based on 100 parts by weight of the plasticizer. Specifically, di(2-ethylhexyl)cyclohexane-1,4-dicarboxylate may be included in an amount of 40 parts by weight or more, or 50 parts by weight or more, and 80 parts by weight or less, 70 parts by weight or less, or 60 parts by weight or less based on 100 parts by weight of plasticizer. The polyol ester-based compound may be included in an amount of 20 parts by weight or more, 30 parts by weight or more, or 40 parts by weight or more, and 60 parts by weight or less, or 50 parts by weight or less based on 100 parts by weight of plasticizer.

If the di(2-ethylhexyl)cyclohexane-1,4-dicarboxylate content is more than 80 parts by weight and the polyol ester-based compound content is less than 20 parts by weight, there may be a problem of increased volatility and poor product durability. Therefore, its use may be limited in products used at high temperatures. Further, its migration resistance is inferior to that of phthalate-based plasticizers, there may be a problem of plasticizer exposure. On the other hand, if the di(2-ethylhexyl)cyclohexane-1,4-dicarboxylate content is less than 40 parts by weight and the polyol ester-based compound content is more than 60 parts by weight, the viscosity of the vinyl chloride resin composition including the plasticizer composition may increase, which may result in poor coating properties such as a slow coating speed, and poor cold resistance, thereby causing problems with product usability in winter.

The polyol ester-based compound may be at least one selected from the group consisting of pentaerythritol tetra n-butyrate, pentaerythritol tetra i-butyrate, pentaerythritol tri n-butyrate mono-valerate, pentaerythritol di n-butyrate di-valerate, pentaerythritol tetravalerate, pentaerythritol tetraoctylate, and pentaerythritol tetra-ethylheptylate. Specifically, the polyol ester-based compound may be pentaerythritol tetravalerate.

Additionally, the present disclosure can provide a vinyl chloride resin composition including the above plasticizer composition. In other words, it is possible to provide a vinyl chloride resin composition exhibiting excellent migration resistance, cold resistance, and processability by including the plasticizer composition.

Therefore, the vinyl chloride resin composition of the present disclosure may include 100 parts by weight of a vinyl chloride resin, 50 to 200 parts by weight of the plasticizer composition, and 1.5 to 10 parts by weight of a stabilizer. Specifically, the plasticizer composition may be included in an amount of 50 parts by weight or more, or 60 parts by weight or more, and 200 parts by weight or less, 150 parts by weight or less, 100 parts by weight or less, 80 parts by weight or less, or 70 parts by weight or less. Additionally, the stabilizer may be included in an amount of 1.5 parts by weight or more, or 3 parts by weight or more, and 10 parts by weight or less, 6 parts by weight or less, or 4 parts by weight or less.

If the content of the plasticizer composition is below the lower limit of the above range, the viscosity of the vinyl chloride resin composition may increase to slow down the coating rate, the coating properties may be deteriorated such as uneven surface of the product, or the effect of improving weather resistance and cold resistance may be poor. If the plasticizer content exceeds the upper limit of the above range, a large amount of plasticizer migrates and a bleeding effect, in which the plasticizer leaks out onto the surface of the final product, is likely to occur, which may cause surface stickiness and cause problems in processing and final products.

The vinyl chloride resin can be prepared by polymerizing a vinyl chloride monomer alone, or a vinyl chloride monomer and a comonomer copolymerizable therewith. At this time, the polymerization method is not particularly limited, and may be performed according to conventional polymerization methods known in the art to which the present invention pertains such as micro suspension polymerization, emulsion polymerization, micro suspension seed polymerization or seed emulsion polymerization. When produced by emulsion polymerization or micro suspension polymerization, the average particle size of the prepared vinyl chloride resin is small and uniform compared to when produced by other polymerization methods.

Examples of the comonomers that can be used in the vinyl chloride copolymer resin may include olefins such as ethylene, propylene, or butene; vinyl esters of carboxylic acid such as vinyl acetate, vinyl propionate, or vinyl stearate; vinyl ethers having an alkyl group such as methyl vinyl ether, ethyl vinyl ether, octyl vinyl ether, or lauryl vinyl ether; vinylidene halides such as vinylidene chloride; unsaturated carboxylic acids such as acrylic acid, methacrylic acid, fumaric acid, maleic acid, itaconic acid, maleic anhydride, or itaconic anhydride, and their acid anhydrides; unsaturated carboxylic acid esters such as methyl acrylate, ethyl acrylate, monomethyl maleate, dimethyl maleate, or butylbenzyl maleate; aromatic vinyl compounds such as styrene, α-methyl styrene, ar divinyl benzene; unsaturated nitriles such as acrylonitrile; or crosslinkable monomers such as diallyl phthalate, etc. These comonomers can be used alone or in combination of two or more thereof. Specifically, the vinyl chloride resin may be a vinyl chloride resin alone, a vinyl chloride acetate copolymer resin alone, or a mixture thereof.

The vinyl chloride resin of one embodiment of the present disclosure may be polyvinyl chloride (PVC) having a weight average degree of polymerization of 700 to 1700, but is not limited thereto. Additionally, the weight average molecular weight (Mw) of the vinyl chloride resin may be 45,000 to 300,000. When the degree of polymerization and the molecular weight are within the above range, dispersibility is excellent, compatibility with plasticizers is good, and processability of the plastisol can be improved. Meanwhile, the weight average molecular weight (Mw) of the vinyl chloride resin is a converted value using standard polystyrene by gel permeation chromatography.

When the degree of polymerization or molecular weight is below the lower limit of the above range, durability may be reduced when used as a product due to insufficient physical properties. When the degree of polymerization or molecular weight is above the upper limit of the above range, processability is very poor and it is necessary to increase the processing temperature, which may result in heat damage to the products.

The stabilizer is added for the purpose of preventing various changes in physical properties that occur when HCl is separated from the vinyl chloride resin and forms a polyene structure, which is a chromophore, causing cleavage and cross-linking of the main chain. The stabilizers include at least one selected from the group consisting of Ca-Zn-based compounds, K-Zn-based compounds, Ba-Zn-based compounds, Na-Zn compounds, Na-K-Zn compounds, organic Tin-based compounds, metallic soap-based compounds, phenol-based compounds, phosphoric acid ester-based compounds, and phosphorous acid ester-based compounds. More specific examples of stabilizers that can be used in the present disclosure include Ca-Zn-based compounds; K-Zn-based compounds; Ba-Zn-based compounds; Na-Zn-based compounds; Na-K-Zn-based compounds; organic Tin-based compounds such as mercaptide-based compounds, maleic acid-based compounds, or carboxylic acid-based compounds; metallic soap-based compounds such as Mg-stearate, Ca-stearate, Pb-stearate, Cd-stearate, or Ba-stearate; phenolic compounds; phosphoric acid ester-based compounds; or phosphorous acid ester-based compounds. They are optionally included depending on the purpose of use. In the present disclosure, it is particularly preferable to use Ba-Zn-based compounds, Na-Zn-based compounds or Na-K-Zn-based compounds.

If the stabilizer is included in an amount less than the lower limit of the above range, a problem of poor thermal stability may occur, and the product may lose strength or become brittle due to thermal decomposition. If the stabilizer is included in an amount more than the upper limit, the stabilizer may migrate out of the product.

The vinyl chloride resin composition may further include at least one selected from the group consisting of a vegetable oil or an epoxidized vegetable oil or a derivative thereof; a pigment; a blowing agent; a slip agent; a filler; a dispersing agent; a viscosity depressant; and a dispersing agent. The additive may be appropriately selected depending on the physical properties to be improved in the vinyl chloride resin composition.

The vegetable oil or epoxidized vegetable oil or a derivative thereof may be at least one selected from the group consisting of soybean oil, palm oil, castor oil, coconut oil, linseed oil, stearic acid, oleic acid, tall oil, linoleic acid, and epoxidized derivatives thereof including epoxidized soybean oil, epoxidized castor oil, epoxidized palm oil, epoxidized coconut oil, epoxidized linseed oil, epoxidized stearic acid, epoxidized oleic acid, epoxidized tall oil, epoxidized linoleic acid and eFAME.

In addition, the vegetable oil or epoxidized vegetable oil or a derivative thereof may be included in an amount of 20 parts by weight or less based on 100 parts by weight of the vinyl chloride resin. Alternatively, the vegetable oil or epoxidized vegetable oil or a derivative thereof may be included in an amount of 20 to 40 parts by weight based on 100 parts by weight of the vinyl chloride resin.

A plasticizer composition including the epoxidized vegetable oil improves volatilization resistance, thermal stability, and elongation. However, it has a high freezing point and low low-temperature stability due to its epoxy structure, so there may be problems with freezing at low temperatures, and its high viscosity limits its use.

The filler of the present disclosure is used for the purpose of improving the productivity and dry touch feeling of the vinyl chloride resin composition, and improving flame retardant properties in some products, and includes at least one selected from the group consisting of calcium carbonate, talc, titanium dioxide, kaolin, silica, alumina, barium sulfate, magnesium hydroxide, glass bubbles in the form of hollow microspheres (soda-lime-borosilicate glass), a boron-based flame retardant, carbon nanotubes, nano-clay, and clay. Preferably, it may be calcium carbonate. As the filler content increases, the viscosity of the vinyl chloride resin composition generally increases, and the migration resistance and dimensional stability tend to improve. In addition, the filler may be included in an amount of 600 parts by weight or less based on 100 parts by weight of the vinyl chloride resin. Additionally, the filler may be calcium carbonate having an average particle diameter (D50) of 1 to 50 µm.

The average particle diameter Dn means a particle diameter at the n% point of the cumulative distribution of the number of particles according to particle diameters. In other words, D50 is a particle diameter at the 50% point of the cumulative distribution of the number of particles according to particle diameters, D90 is a particle diameter at the 90% point of the cumulative distribution of the number of particles according to particle diameters, and D10 is a particle diameter at the 10% point of the cumulative distribution of the number of particles according to particle diameters.

The Dn may be measured using a laser diffraction method. Specifically, the powder to be measured is dispersed in the dispersion medium and introduced into a commercially available particle size measuring device (e.g., Microtrac S3500, Mastersizer 3000). Then, a particle size distribution is obtained by measuring a difference in diffraction patterns according to particle diameters when the particles pass through the laser beam. In the measuring device, D10, D50 and D90 can be obtained by calculating a particle diameter at a point of reaching 10%, 50% and 90% of the cumulative distribution of the number of particles according to particle diameters.

The pigment of the present disclosure is added to impart color to the vinyl chloride-based resin composition, and may be at least one selected from the group consisting of quinacridone-based pigments, perylene-based pigments, polyazo condensed pigments, isoindolinone-based pigments, copper phthalocyanine-based pigments, azo-based pigments, barium sulfate-based pigments, calcium carbonate-based pigments, yellow iron oxide-based pigments, chromium-based pigments, cadmium-based pigments, titanium white, and carbon black. The pigment may be included in an amount of 20 parts by weight or less based on 100 parts by weight of the vinyl chloride-based resin. Preferably, it may be included in an amount of 0.1 to 20 parts by weight, or 3 to 15 parts by weight. When applying the plasticizer composition of the present disclosure, the migration of the plasticizer is improved. Accordingly, in the case of products in which pigments are prescribed, the phenomenon of pigment migration with the plasticizer and color transfer can be significantly reduced.

The blowing agent may be a chemical blowing agent, a physical blowing agent, or a mixture thereof. The blowing agent may be used to reduce the weight of the resin composition. The chemical blowing agent is not particularly limited as long as it is a compound that decomposes above a certain temperature and generates gas. Examples thereof may include azodicarbonamide, azodiisobutyro-nitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, trihydrazino triazine, and the like. Further, examples thereof include sodium bicarbonate, potassium bicarbonate, ammonium bicarbonate, sodium carbonate, and ammonium carbonate. In addition, examples of the physical blowing agent may include inorganic blowing agents such as carbon dioxide, nitrogen, argon, water, air, and helium, and organic blowing agents such as aliphatic hydrocarbons containing 1 to 9 carbon atoms, aliphatic alcohols containing 1 to 3 carbon atoms and halogenated aliphatic hydrocarbons containing 1 to 4 carbon atoms. The blowing agent may be included in an amount of 20 parts by weight or less based on 100 parts by weight of the vinyl chloride resin.

The slip agent is an additive that leaks out of PVC products and is applied to reduce friction between products to facilitate coating, improve surface touch, and help products slip easily. It may be at least one selected from the group consisting of Erucamide, Oleamide, Stearamide and Behenamide. In addition, the slip agent may be included in an amount of 30 parts by weight or less based on 100 parts by weight of the vinyl chloride resin, and specifically, each of the above slip agents may be included in an amount of 20 parts by weight or less.

The dispersing agent is adsorbed to the surface to reduce the attractive force between particles, and allows re-agglomeration, thereby facilitating the movement of particles and stabilizing the viscosity and behavior of the resin composition. One or more acidic ester-based compounds with excellent dispersing ability may be used. The acidic ester-based compound not only exhibits excellent dispersibility in vinyl chloride resin, but can also exhibit an additional viscosity reducing effect due to its property of reducing the viscosity of the mixture.

Specifically, the acidic ester-based compounds may be at least one selected from the group consisting of phosphoric acid ester-based compounds such as phosphoric acid ester; and fatty acid esters such as stearyl cetyl stearate (CETS), ethylene glycol distearate (EGDS), glyceryl monoolate (GMO), pentaerythritol tetrastearate (PETS), glyceryl monostearate (GMS), stearyl stearate, or distearyl phthalate.

The dispersing agent may have a density at 20 °C of 0.9 to 1.3 g/cm³, more specifically 0.90 to 1.1 g/cm³, and an acid value of 80 to 120 mgKOH/g, more specifically 90 to 100 mgKOH/g. When the above density and acid value conditions are met, excellent dispersibility can be exhibited and the viscosity reducing effect on the resin composition can be further improved.

Additionally, the dispersing agent may have a flash point of 80 °C or higher, more specifically, 100 °C to 300 °C. When having the flash point within the above range, thermal stability of the resin composition can be improved. Further, the dispersing agent may be included in an amount of 20 parts by weight or less based on 100 parts by weight of the vinyl chloride resin.

The viscosity depressant is a carboxylic acid ester-based compound used for the purpose of improving processability by reducing viscosity of the composition. Specifically, the viscosity depressant may be at least one selected from the group consisting of carboxylic acid esters represented by the following Chemical Formula 3, prepared by an esterification reaction of C8 to C22 carboxylic acid with alcohol having a C8 to C22 alkyl group. In Chemical Formula 3, Rₐ and R_{b} are each independently a C8 to C22 linear or branched alkyl group, such as n-octyl, t-butyl, n-nonyl, or n-decyl. Further, the viscosity depressant may have a density at 20 °C of 0.85 g/cm³ to 0.9 g/cm³, more specifically 0.87 g/cm³ to 0.9 g/cm³, and a solidification point of -7 °C or lower, more specifically -10 °C to - 40 °C, and a flash point of 120 °C or higher, more specifically, 130 °C to 200 °C. When satisfying the above-described density, solidification point and flash point conditions, it may have a rapid gelling rate and excellent viscosity depressing capability, thereby further improving processability of the resin composition

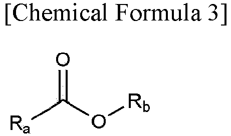

In addition, the dispersing agent is added for the purpose of lowering the plastisol viscosity. Further, it has the characteristic of being mostly volatilized during processing, unlike the viscosity depressant, and are mostly composed of organic solvents. The dispersing agent may be at least one selected from the group consisting of alcohols including benzene, xylene, toluene, acetone, ethyl acetate, and isobutyl alcohol, esters, ketones, hydrocarbons including aliphatics and aromatics, and ethers. Additionally, the viscosity depressant and the dispersing agent may each be included in an amount of 100 parts by weight or less based on 100 parts by weight of the vinyl chloride resin.

The vinyl chloride resin composition according to the present disclosure can be prepared by a method generally known in the art using a vinyl chloride resin, a plasticizer, and optionally additives, and the method is not particularly limited.

Hereinafter, preferred embodiments are presented to facilitate the understanding of the invention. However, the following examples are for illustrative purposes only and are not intended to limit the present disclosure.

### Experimental Example 1

The plasticizer with the mixing ratio shown in Table 1 was used, the vinyl chloride resin having a weight average degree of polymerization of 1,000 and a weight average molecular weight of about 80,000 to 100,000 was used, and a Ba-Zn-based mixed stabilizer was used as the heat stabilizer. In addition, a plastisol, that is, a vinyl chloride resin composition containing 60 parts by weight of a plasticizer and 3 parts by weight of a heat stabilizer based on 100 parts by weight of the vinyl chloride resin was prepared. According to mixing of the plasticizer in Table 1, the viscosity, change in viscosity over time, gelling rate, migration resistance, cold resistance (LTB, low brittleness temperature), and volatilization loss for volatility evaluation were measured. Each evaluation method is as follows.

In Table 1 below, DEHCH refers to di(2-ethylhexyl)cyclohexane-1,4-dicarboxylate, and pentaerythritol tetravalerate (2,2-bis[[(1-oxopentyl)oxy]methyl]propane-1,3-diyl divalerate) is abbreviated as substance P. Additionally, DOP refers to diethylhexyl phthalate (DEHP).

### (1) Viscosity

The plastisol was prepared by mixing the vinyl chloride resin composition at 1,000 rpm for 10 minutes using a Mathis mixer, and the viscosity was measured using a Brookfield viscometer after aging for 1 hour at 25 °C.

### (2) Change in viscosity over time

The change in viscosity over time refers to the value obtained by measuring the viscosity of the vinyl chloride resin again after 1 day and then dividing it by the initial viscosity.

### (3) Gelling rate

The gelling rate was measured at 120 °C using scanning vibrating needle curemeter (SYNC). The amplitude decreased as the gelation proceeded in the SYNC equipment. The gelling rate was measured by comparing the amplitude reduction rate, and scored (very good 5>4>3>2>1 very poor).

### (4) Migration resistance

The evluation was conducted with reference to the ISO 177:1988 test standard. The processed sheet was cut into 3cm x 5cm, and the weight change of the sheet was measured at 60 °C under a load of 5 kg for 7 days.

### (5) Cold resistance

Cold resistance was evaluated by measuring low temperature brittleness (LTB). While lowering the temperature of the sample, impact was applied to the sample with a hammer to measure the temperature at which the sample broke. Herein, the low temperature brittleness refers to the temperature at which the sample loses flexibility and breaks.

### (6) Volatilization resistance

Volatilization resistance was measured by applying the ISO 177 test method. 30 g of a plasticizer sample was volatilized at 200 °C for 1 hour, and then the weight change of the plasticizer was measured.

The results of Examples and Comparative Examples are shown in Tables 1 to 3.

**[Table 1]**

| | Example 1 | Example 2 | Example 3 | Example 4 | Example 5 |
|---|---|---|---|---|---|
| Plasticizer composition (weight ratio) | DEHCH : substance P 40: 60 | DEHCH : substance P 50:50 | DEHCH : substance P 60:40 | DEHCH : substance P 70 : 30 | DEHCH : substance P 80 : 20 |
| Viscosity (cps) | 3080 | 3000 | 3020 | 2950 | 2930 |
| Change in viscosity after 1 day | 1.2 | 1.2 | 1.3 | 1.3 | 1.3 |
| Gelling rate* | 4 | 4 | 4 | 4 | 4 |
| Migration resistance (%) | 1.6 | 1.9 | 2.1 | 2.3 | 2.6 |
| Cold resistance (°C) | -42 | -43 | -45 | -46 | -48 |
| Volatilization loss (%) | 0.5 | 0.6 | 0.7 | 0.7 | 0.8 |

**[Table 2]**

| | Comp. Ex. 1 | Comp. Ex. 2 | Comp. Ex. 3 | Comp. Ex. 4 | Comp. Ex. 5 |
|---|---|---|---|---|---|
| Plasticizer composition (weight ratio) | DOTP 100 | DEHCH 100 | substance P 100 | DOP 100 | DINCH 100 |
| Viscosity (cps) | 3670 | 2900 | 3210 | 4660 | 2810 |
| Change in viscosity after 1 day | 1.2 | 1.3 | 1.3 | 1.4 | 1.3 |
| Gelling rate* | 2 | 4 | 4 | 5 | 1 |
| Migration resistance (%) | 6.6 | 3.1 | 0.7 | 0.5 | 5.3 |
| Cold resistance (°C) | -43 | -52 | -32 | -31 | -52 |
| Volatilization loss (%) | 0.5 | 1.0 | 0.2 | 1.6 | 0.8 |

**[Table 3]**

| | Comp. Ex. 6 | Comp. Ex. 7 | Comp. Ex. 8 | Comp. Ex. 9 | Comp. Ex. 10 | Comp. Ex. 11 |
|---|---|---|---|---|---|---|
| Plasticizer composition (weight ratio) | TBC 100 | DINCH : substance P 60 : 40 | DINCH : substance P 40 : 60 | DEHCH : TBC 80 : 20 | DEHCH: substance P 90 : 10 | DEHCH: substance P 10 : 90 |
| Viscosity (cps) | 3580 | 3000 | 3070 | 3430 | 2930 | 3210 |
| Change in viscosity after 1 day | 16.8 | 1.3 | 1.2 | 1.6 | 1.2 | 1.3 |
| Gelling rate* | 5 | 2.5 | 3 | 4.5 | 4 | 4 |
| Migration resistance (%) | 0.1 | 3.5 | 2.5 | 2.6 | 2.9 | 0.9 |
| Cold resistance (°C) | -28 | -42 | -38 | -32 | -47 | -30 |
| Volatilization loss (%) | 3.2 | 0.6 | 0.4 | 2.3 | 0.9 | 0.3 |

## Claims

1. A plasticizer composition comprising di(2-ethylhexyl)cyclohexane-1,4-dicarboxylate (DEHCH) and a polyol ester-based compound,
wherein the plasticizer composition comprises 40 to 80 parts by weight of di(2-ethylhexyl)cyclohexane-1,4-dicarboxylate, and 20 to 60 parts by weight of a polyol ester-based compound based on 100 parts by weight of the plasticizer composition.

2. The plasticizer composition of Claim 1,
wherein the polyol ester-based compound is at least one selected from the group consisting of pentaerythritol tetra n-butyrate, pentaerythritol tetra i-butyrate, pentaerythritol tri n-butyrate mono-valerate, pentaerythritol di n-butyrate di-valerate, pentaerythritol tetravalerate, pentaerythritol tetraoctylate, and pentaerythritol tetra-ethylheptylate.

3. A vinyl chloride resin composition comprising
100 parts by weight of a vinyl chloride resin,
50 to 200 parts by weight of the plasticizer composition of Claim 1 or Claim 2, and
1.5 to 10 parts by weight of a stabilizer.

4. The vinyl chloride resin composition of Claim 3,
wherein the stabilizer is at least one selected from the group consisting of a Ca-Zn-based compound, a K-Zn-based compound, a Ba-Zn-based compound, a Na-Zn-based compound, a Na-K-Zn-based compound, an organic Tin-based compound, a metallic soap-based compound, a phenol-based compound, a phosphoric acid ester-based compound, and a phosphorous acid ester-based compound.

5. The vinyl chloride resin composition of Claim 3,
further comprising at least one selected from the group consisting of a vegetable oil or an epoxidized vegetable oil or a derivative thereof; a pigment; a blowing agent; a slip agent; a filler; a dispersing agent; a viscosity depressant; and a dispersing agent.

6. The vinyl chloride resin composition of Claim 5,
wherein the vegetable oil or the epoxidized vegetable oil or a derivative thereof is at least one selected from the group consisting of soybean oil, palm oil, castor oil, coconut oil, linseed oil, stearic acid, oleic acid, tall oil, linoleic acid, epoxidized soybean oil, epoxidized castor oil, epoxidized palm oil, epoxidized coconut oil, epoxidized linseed oil, epoxidized stearic acid, epoxidized oleic acid, epoxidized tall oil, epoxidized linoleic acid and eFAME.

7. The vinyl chloride resin composition of Claim 5,
wherein the pigment is added to impart color to the vinyl chloride-based resin composition, and is at least one selected from the group consisting of quinacridone-based pigments, perylene-based pigments, polyazo condensed pigments, isoindolinone-based pigments, copper phthalocyanine-based pigments, azo-based pigments, barium sulfate-based pigments, calcium carbonate-based pigments, yellow iron oxide-based pigments, chromium-based pigments, cadmium-based pigments, titanium white, and carbon black.

8. The vinyl chloride resin composition of Claim 5,
wherein the blowing agent is a chemical blowing agent, a physical blowing agent, or a mixture thereof.

9. The vinyl chloride resin composition of Claim 5,
wherein the slip agent is at least one selected from the group consisting of Erucamide, Oleamide, Stearoamide, and Behenamide.

10. The vinyl chloride resin composition of Claim 5,
wherein the filler is at least one selected from the group consisting of talc, silica, kaolin, alumina, magnesium hydroxide, calcium carbonate (CaCO₃), and barium sulfate (BaSO₄).

11. The vinyl chloride resin composition of Claim 3,
wherein the vinyl chloride resin is a vinyl chloride resin alone, a vinyl chloride acetate copolymer resin alone, or a mixture thereof.
